# EUROPEAN PATENT APPLICATION

(11) **EP 4 156 853 A1**
(43) Date of publication of application: **29.03.2023**
(21) Application number: 22197723.4
(22) Date of filing: 26.09.2022
(51) Int. Cl.: H04W 76/34, H04W 60/00, H04W 88/06, H04W 68/02

(54) **MUSIM SR PROCEDURE TRANSMISSION FAILURE**

(30) Priority: 28.09.2021 US 202163249076 P; 01.09.2022 US 202217901842
(71) Applicant: MediaTek Inc., Hsinchu City 30078 (TW)
(72) Inventor: LIN, Yuan-Chieh, 30078 Hsinchu City (TW); CHIANG, Pan-Yen, 30078 Hsinchu City (TW); HUANG-FU, Chien-Chun, 30078 Hsinchu City (TW)
(74) Representative: Habermann, Hruschka & Schnabel

(57) **Abstract**

A method of handling NAS signaling connection release and rejection of paging under transmission failure for MUSIM UE is proposed. UE has established (710) a NAS signaling connection or has received (801) a paging from the network on the first USIM. However, UE has more important job to be started or ongoing on the second USIM. UE then initiates (702, 802) a service request procedure by transmitting a service request to the network, to release the NAS signaling connection or to reject the paging on the first USIM. Due to poor radio signal quality, a transmission failure occurred. In one novel aspect, UE does not restart (703, 803) the service request procedure. Instead, UE locally releases (704, 804) the NAS signaling connection on the first USIM. As a result, UE is able to start the more important job on the second USIM, or the user experience on the second USIM is improved.

## Description

### CROSS REFERENCE TO RELATED APPLICATION

This application claims priority under 35 U.S.C. §119 from U.S. Provisional Application Number 63/249,076 entitled "MUSIM SR Procedure Transmission Failure," filed on September 28, 2021, the subject matter of which is incorporated herein by reference.

### TECHNICAL FIELD

The disclosed embodiments relate generally to wireless communication systems, and, more particularly, to release NAS signaling connection or rejection of paging for MUSIM UEs upon transmission failure.

### BACKGROUND

The wireless communications network has grown exponentially over the years. A Long-Term Evolution (LTE) system offers high peak data rates, low latency, improved system capacity, and low operating cost resulting from simplified network architecture. LTE systems, also known as the 4G system, also provide seamless integration to older wireless network, such as GSM, CDMA and Universal Mobile Telecommunication System (UMTS). In LTE systems, an evolved universal terrestrial radio access network (E-UTRAN) includes a plurality of evolved Node-Bs (e.g., eNodeBs or eNBs) communicating with a plurality of mobile stations, referred to as user equipments (UEs). The 3rd generation partner project (3GPP) network normally includes a hybrid of 2G/3G/4G systems. The Next Generation Mobile Network (NGMN) board has decided to focus the future NGMN activities on defining the end-to-end requirements for 5G new radio (NR) systems. The base stations in 5G NR systems are referred to as Next Generation Node-Bs (e.g., gNodeBs or gNBs).

Non-access stratum (NAS) is used to convey non-radio signalling between UE and the Mobility Management Entity (MME) or the Access and Mobility Management Function (AMF) for an LTE/NR access. A NAS signaling connection can be established via an NAS procedure in 4G/LTE or in 5GS/NR. The universal subscriber identity module (USIM) is one of several software applications that resides in the UE, called the universal integrated circuit card (UICC). As smartphones and services became more affordable, their users have tended to use different mobile subscriptions (i.e., USIM cards) for travel, business, and personal needs. Many UEs now support multiple USIM cards (MUSIM) for registration and operation over different USIM simultaneously.

When a UE establishes a NAS signaling connection over on a first USIM, the UE may need to switch a second USIM due to more important activities on the second USIM. If the UE supports MUSIM and requests the network to release the NAS signaling connection or reject the paging over the first USIM, the UE can initiate a service request procedure and send a (control plane/extended) service request message to the network. The UE can set the request type to "NAS Signaling connection release" or "Rejection of paging" in an EXTENDED SERVICE REQUEST message, a CONTROL PLANE SERVICE REQUEST message, or a SERVICE REQUEST message. Subsequently, the UE should then receive an indication from the network that the NAS signaling connection is released over the first USIM.

The signal quality over the first USIM may not always be good for successful transmission. When UE encounters transmission failure of an uplink NAS message indication from lower layers, UE knows that the request to release the NAS signaling connection or reject the paging over the first USIM is not successfully delivered to the network. Typically, UE would want to restart the service request procedure upon a transmission failure. Under this specific scenario, however, the service request procedure may keep failing if the signal quality over the first USIM does not improve. More importantly, the purpose of the service request is to terminate the NAS signaling connection or to reject the paging over the first USIM. Therefore, it is not necessary to keep restarting the service request procedure (it may not succeed even after several retries, and long retry time also make the service performance of another USIM bad for a long time). A solution is desired to handle this specific scenario such that the UE can quickly switch to the second USIM for other more important activities with better performance.

### SUMMARY

A method of handling NAS signaling connection release and rejection of paging under transmission failure for MUSIM UE is proposed. UE has established a NAS signaling connection on a first USIM (connected mode), or has received a paging from the network on the first USIM (idle mode or inactive mode). However, UE has more important job to be started or ongoing on the second USIM. UE initiates a service request procedure by transmitting a service request to the network, to release the NAS signaling connection or to reject the paging on the first USIM. Due to e.g., suddenly dropped poor radio signal quality, a transmission failure occurred. In one novel aspect, UE does not restart the service request procedure. Instead, UE aborts the service request procedure (also stop the associated timer, release the associated resource allocated for the procedure, or enter REGISTERED sate) and locally releases the NAS signaling connection on the first USIM and enters idle mode. As a result, UE is able to start the more important job on the second USIM, or the user experience on the second USIM is improved.

In one embodiment, a UE establishes a non-access stratum (NAS) signaling connection in a wireless communication network. The UE supports multiple universal subscriber identity module (MUSIM) and the NAS signaling connection is established on a first USIM. The UE initiates a service request procedure by transmitting a service request message to the network over the first USIM. The service request message has a request type indicating to release the NAS signaling connection. The UE aborts the service request procedure upon detecting a transmission failure from lower layers on delivery of the service request message. The UE locally releases the NAS signaling connection on the first USIM.

In another embodiment, a UE receives a paging on a first universal subscriber identity module (USIM) in a wireless communication network. The UE supports multiple USIM (MUSIM) and is in an IDLE (or INACTIVE) mode on the first USIM. The UE initiates a service request procedure by transmitting a request message to the network over the first USIM. The request message has a request type indicating rejection of the paging. The UE detects a transmission failure from lower layers on delivery of the request message. The UE establishes a non-access stratum (NAS) signaling connection in response to the paging. The UE locally releases the established NAS signaling connection on the first USIM upon the transmission failure. The UE re-enters the IDLE mode on the first USIM.

Other embodiments and advantages are described in the detailed description below. This summary does not purport to define the invention. The invention is defined by the claims.

### BRIEF DESCRIPTION OF THE DRAWINGS

The accompanying drawings, where like numerals indicate like components, illustrate embodiments of the invention.
Figure 1 illustrates a user equipment (UE) handling NAS signaling connection release or rejection of paging for supporting Multiple USIM (MUSIM) in an EPS/5GS network in accordance with one novel aspect.
Figure 2 is a simplified block diagram of a UE and a base station in accordance with various embodiments of the present invention.
Figure 3 illustrates one embodiment of handling NAS signaling connection release under service request procedure with transmission failure for MUSIM UE in 5GS network in accordance with one novel aspect.
Figure 4 illustrates one embodiment of handling rejection of paging under service request procedure with transmission failure for MUSIM UE in 5GS network in accordance with one novel aspect.
Figure 5 illustrates one embodiment of handling NAS signaling connection release under service request procedure with transmission failure for MUSIM UE in EPS network in accordance with one novel aspect.
Figure 6 illustrates one embodiment of handling rejection of paging under service request procedure with transmission failure for MUSIM UE in EPS network in accordance with one novel aspect.
Figure 7 is a flow chart of a method of handling NAS signaling connection release for MUSIM UE in accordance with one novel aspect of the present invention.
Figure 8 is a flow chart of a method of handling rejection of paging for MUSIM UE in accordance with one novel aspect of the present invention.

### DETAILED DESCRIPTION

Reference will now be made in detail to some embodiments of the invention, examples of which are illustrated in the accompanying drawings.

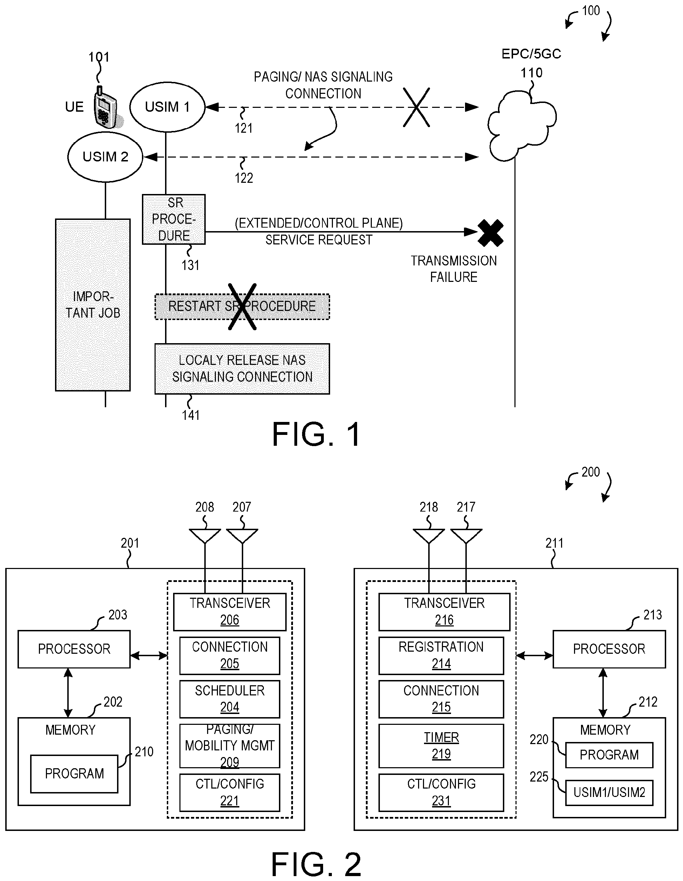

Figure 1 illustrates a user equipment (UE) handling NAS signaling connection release or rejection of paging for supporting Multiple USIM (MUSIM) in an EPS/5GS network 100 in accordance with one novel aspect. In 3GPP NR, 5G NR access network (a plurality of base stations, e.g., Next Generation Node-Bs (gNBs), communicating with a plurality of mobile stations referred as user equipment (UEs). Orthogonal Frequency Division Multiple Access (OFDMA) has been selected for NR downlink (DL) radio access scheme due to its robustness to multipath fading, higher spectral efficiency, and bandwidth scalability. In both LTE and 5GS NR networks, Physical Downlink Control Channel (PDCCH) is used for downlink scheduling. Physical Downlink Shared Channel (PDSCH) is used for downlink data. Similarly, Physical Uplink Control Channel (PUCCH) is used for carrying uplink (UL) control information. Physical Uplink Shared Channel (PUSCH) is used for uplink data. In addition, physical random-access channel (PRACH) is used for non-contention-based RACH.

On the other hand, non-access stratum (NAS) is used to convey non-radio signalling between UE and the Mobility Management Entity (MME) or the Access and Mobility Management Function (AMF) for an LTE/NR access. In the example of Figure 1, UE 101 supports multiple universal subscriber identity module (MUSIM) for registration and operation with EPC/5GC 110 over different USIM simultaneously. The two or more different USIMs can register to same EPS, same 5Gs, different EPSs, different 5GSs, or one or more EPS and one or more 5GS. When UE 101 receives paging and/or establishes a NAS signaling connection over on a first USIM1 (121), UE 101 may need to switch its limited hardware resource (e.g., transceiver) to a second USIM2 due to more important activities are started or ongoing on the second USIM2 (122) with better performance and user experience.

UE with multiple USIMs is capable of maintaining a separate registration state with a PLMN/SNPN for each USIM at least over 3GPP Access and supporting one or more of the MUSIM features: Connection Release Supported, Paging Cause Indication for Voice Service Supported, Reject Paging Request Supported, Paging Timing Collision Control, and Paging Restriction Supported. If UE 101 requests the network to release the NAS signaling connection or reject the paging over the first USIM, UE 101 can initiate a service request procedure and send a service request message to the network (as depicted in step 131). The UE 101 can set the request type to "NAS Signaling connection release" or "Rejection of paging" in an EXTENDED SERVICE REQUEST message, a CONTROL PLANE SERVICE REQUEST message, or a SERVICE REQUEST message. Subsequently, the UE 101 expects the network send one or more response messages e.g., SERVICE ACCEPT message and/or CONFIGURATION UPDATE COMMAND; and then receive an indication from the network that the NAS signaling connection is released over the first USIM.

The signal quality over the first USIM may not always be good for successful transmission. When UE encounters transmission failure (132) of an uplink NAS message indication from lower layers, UE knows that the request to release the NAS signaling connection or reject the paging over the first USIM is not successfully delivered to the network. Typically, UE would want to restart the service request procedure upon a transmission failure. Under this specific scenario, however, the service request procedure may keep failing if the signal quality over the first USIM does not improve. More importantly, the purpose of the service request is to terminate the NAS signaling connection or to reject the paging over the first USIM (not actually want to get "more service" from the network). Therefore, it is not necessary to keep restarting the service request procedure upon transmission failure under such scenarios.

In accordance with one novel aspect, a method of handling NAS signaling connection release and rejection of paging under transmission failure for MUSIM UE is proposed. UE 101 has established a NAS signaling connection on USIM1 (connected mode), or has received a paging from the network on USIM1 (idle or inactive mode). However, UE 101 has more important job to be started or ongoing on USIM2. UE 101 initiates a service request procedure by transmitting a service request to the network (step 131), to release the NAS signaling connection or to reject the paging on USIM1. Due to e.g., suddenly dropped poor radio signal quality, a transmission failure occurred. UE 101 does not restart the service request procedure. Instead, UE 101 aborts the service request procedure and locally releases the NAS signaling connection on USIM1 and (re)enters idle mode (141). As a result, UE 101 is able to start the more important job on USIM2, or the user experience on USIM2 is improved.

Figure 2 is a simplified block diagram of wireless devices 201 and 211 in accordance with embodiments of the present invention. For wireless device 201 (e.g., a base station), antennae 207 and 208 transmit and receive radio signal. RF transceiver module 206, coupled with the antennae, receives RF signals from the antennae, converts them to baseband signals and sends them to processor 203. RF transceiver 206 also converts received baseband signals from the processor, converts them to RF signals, and sends out to antennae 207 and 208. Processor 203 processes the received baseband signals and invokes different functional modules and circuits to perform features in wireless device 201. Memory 202 stores program instructions and data 210 to control the operations of device 201.

Similarly, for wireless device 211 (e.g., a user equipment), antennae 217 and 218 transmit and receive RF signals. RF transceiver module 216, coupled with the antennae, receives RF signals from the antennae, converts them to baseband signals and sends them to processor 213. The RF transceiver 216 also converts received baseband signals from the processor, converts them to RF signals, and sends out to antennae 217 and 218. Processor 213 processes the received baseband signals and invokes different functional modules and circuits to perform features in wireless device 211. Memory 212 stores program instructions and data 220 and multiple USIM cards 225 to control the operations of the wireless device 211.

The wireless devices 201 and 211 also include several functional modules and circuits that can be implemented and configured to perform embodiments of the present invention. In the example of Figure 2, wireless device 201 is a base station that includes an RRC connection handling module 205, a scheduler 204, a paging and mobility management module 209, and a control and configuration circuit 221. Wireless device 211 is a UE that includes a connection handling module 215, a registration module 214, a paging and mobility handling module 219, and a control and configuration circuit 231. Note that a wireless device may be both a transmitting device and a receiving device. The different functional modules and circuits can be implemented and configured by software, firmware, hardware, and any combination thereof. The function modules and circuits, when executed by the processors 203 and 213 (e.g., via executing program codes 210 and 220), allow base station 201 and UE 211 to perform embodiments of the present invention.

In one example, the base station 201 establishes signaling connection with the UE 211 via connection handling circuit 205, schedules downlink and uplink transmission for UEs via scheduler 204, performs paging, mobility, and handover management via mobility management module 209, and provides control and configuration information to UEs via configuration circuit 221. The UE 211 performs registration with the network via registration module 214, establishes signaling connection via connection handling circuit 215, maintains timer 219, and obtains configuration information via control and configuration circuit 231. In one novel aspect, UE 211 supports MUSIM and handles releasing of a NAS signaling connection or rejection of paging over one USIM to improve the service of another USIM.

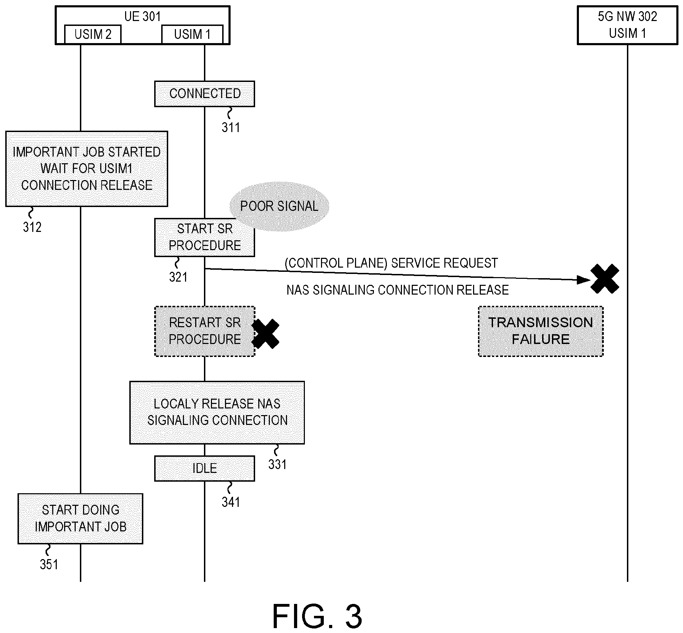

Figure 3 illustrates one embodiment of handling NAS signaling connection release under service request procedure with transmission failure for MUSIM UE in 5GS network in accordance with one novel aspect. UE 301 is equipped with multiple USIMs including USIM1 and USIM2. In step 311, UE 301 has registered to the network and established a NAS signaling connection and is in connected mode over USIM1. In step 312, UE 301 determines that an important job is to be started on USIM2 and is expecting USIM1 to release the NAS signaling connection. For example, USIM2 is starting to do a very import job like mobile originated voice call while USIM1 is occupying the RF hardware resource doing non-urgent jobs like background download a new version of Android OS image.

In step 321, UE 301 initiates a service request procedure by transmitting a SERVICE REQUEST message or a CONTROL PLANE SERVICE REQUEST message to the 5GS network 302. The request type of the message is set to NAS signaling connection release. However, the radio signal quality may be poor at this time and the message cannot be successfully delivered to the network. As a result, a transmission failure occurs, and UE 301 receives an indication from the low layer indicating such transmission failure with or without tracking area identifier (TAI) change. In one novel aspect, in response to the transmission failure, UE 301 does NOT restart the service request procedure. This is because the purpose of the service request procedure is to release the NAS signaling on USIM1 to facilitate the operation on USIM2. Therefore, in step 331, UE 301 aborts the service request procedure, enters state 5GMM-REGISTERED, locally releases the N1 NAS signaling connection, stops timer T3517 and locally releases any resources allocated for the service request procedure over USIM1. In step 341, UE 301 is in IDLE mode on USIM1. In step 351, UE 301 starts to perform the more important job on USIM2.

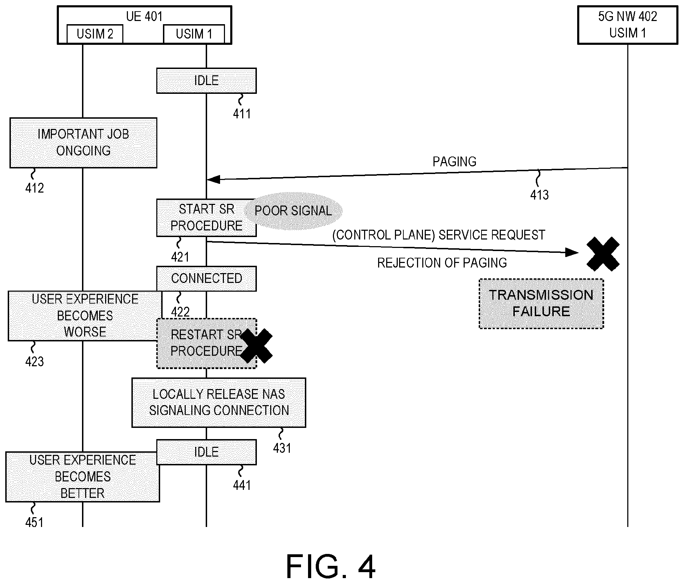

Figure 4 illustrates one embodiment of handling rejection of paging under service request procedure with transmission failure for MUSIM UE in 5GS network in accordance with one novel aspect. UE 401 is equipped with multiple USIMs including USIM1 and USIM2. In step 411, UE 401 has not established any NAS signaling connection and is in IDLE mode over USIM1; or in INACTIVE mode over USIM1. In step 412, UE 401 has an important job that is ongoing on USIM2 and is expecting USIM1 to not use any NAS signaling connection. For example, USIM2 is currently doing a very import job like mobile originated voice call while USIM1 receives a paging in step 413. If UE 401 accepts the paging and enters connected mode over USIM1, then the user experience on USIM2 (the voice call) will become worse (or even the voice call will be dropped/terminated). Therefore, UE 401 should reject the paging on USIM1.

In step 421, UE 401 initiates a service request procedure by transmitting a SERVICE REQUEST message or a CONTROL PLANE SERVICE REQUEST message to the 5GS network 402. The request type of the message is set to rejection of paging. However, the radio signal quality may be poor at this time and the message cannot be successfully delivered to the network. As a result, a transmission failure occurs, and UE 401 receives an indication from the low layer indicating such transmission failure with or without tracking area identifier (TAI) change. In step 422, UE 401 established a NAS signaling connection and is in connected mode on USIM1. In step 423, the user experience on USIM2 becomes poor. In one novel aspect, in response to the transmission failure, UE 401 does NOT restart the service request procedure. This is because the purpose of the service request procedure is to reject the paging on USIM1 (and to release the established NAS signaling connection) to facilitate the operation on USIM2. Therefore, in step 431, UE 401 aborts the service request procedure, enters state 5GMM-REGISTERED, locally releases the N1 NAS signaling connection, stops timer T3517 and locally releases any resources allocated for the service request procedure. In step 441, UE 401 is in IDLE mode on USIM1. In step 451, the user experience on USIM2 becomes better.

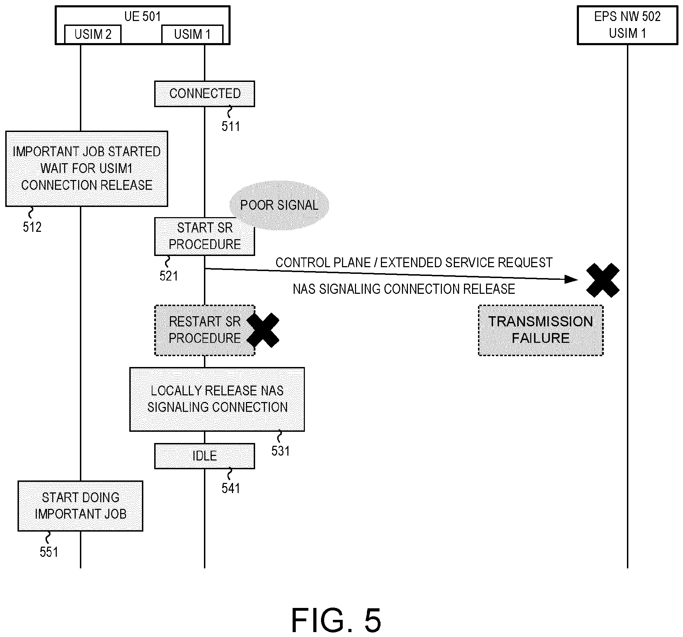

Figure 5 illustrates one embodiment of handling NAS signaling connection release under service request procedure with transmission failure for MUSIM UE in EPS network in accordance with one novel aspect. UE 501 is equipped with multiple USIMs including USIM1 and USIM2. In step 511, UE 501 has registered to the network and established a NAS signaling connection and is in connected mode over USIM1. In step 512, UE 501 determines that an important job is to be started on USIM2 and is expecting USIM1 to release the NAS signaling connection. For example, USIM2 is starting to do a very import job like mobile originated voice call while USIM1 is occupying the RF hardware resource doing non-urgent jobs like background download a new version of Android OS image.

In step 521, UE 501 initiates a service request procedure by transmitting a SERVICE REQUEST message, an EXTENDED SERVICE REQUEST message, or a CONTROL PLANE SERVICE REQUEST message to the EPS network 502. The request type of the message is set to NAS signaling connection release. However, the radio signal quality may be poor at this time and the message cannot be successfully delivered to the network. As a result, a transmission failure occurs, and UE 501 receives an indication from the low layer indicating such transmission failure with or without tracking area identifier (TAI) change. In one novel aspect, in response to the transmission failure, UE 501 does NOT restart the service request procedure. This is because the purpose of the service request procedure is to release the NAS signaling on USIM1 to facilitate the operation on USIM2. Therefore, in step 531, UE 501 aborts the service request procedure, enters state EMM-REGISTERED, locally releases the NAS signaling connection, stops timer T3417 and locally releases any resources allocated for the service request procedure over USIM1. In step 541, UE 501 is in IDLE mode on USIM1. In step 551, UE 501 starts to perform the more important job on USIM2.

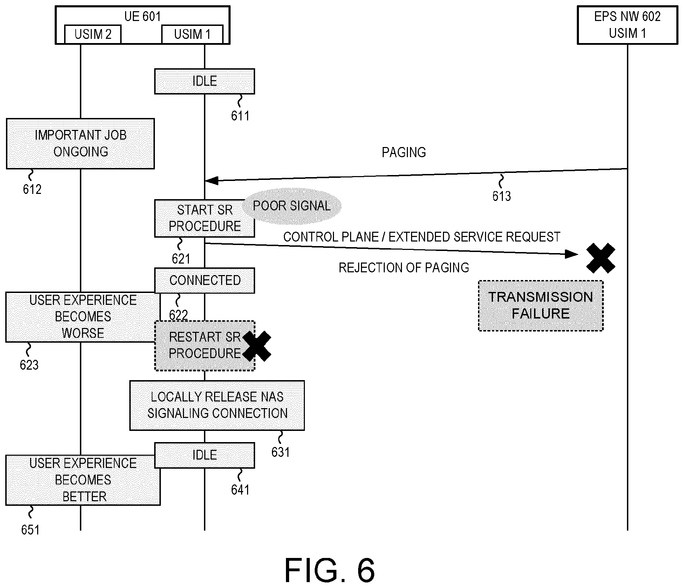

Figure 6 illustrates one embodiment of handling rejection of paging under service request procedure with transmission failure for MUSIM UE in EPS network in accordance with one novel aspect. UE 601 is equipped with multiple USIMs including USIM1 and USIM2. In step 611, UE 601 has not established any NAS signaling connection and is in IDLE mode over USIM1. In step 612, UE 601 has an important job that is ongoing on USIM2 and is expecting USIM1 to not use any NAS signaling connection. For example, USIM2 is currently doing a very import job like mobile originated voice call while USIM1 receives a paging in step 613. If UE 601 accepts the paging and enters connected mode over USIM1, then the user experience on USIM2 (the voice call) will become worse. Therefore, UE 601 should reject the paging on USIM1.

In step 621, UE 601 initiates a service request procedure by transmitting a SERVICE REQUEST message, an EXTENDED SERVICE REQUEST message, or a CONTROL PLANE SERVICE REQUEST message to the EPS network 602. The request type of the message is set to rejection of paging. However, the radio signal quality may be poor at this time and the message cannot be successfully delivered to the network. As a result, a transmission failure occurs, and UE 601 receives an indication from the low layer indicating such transmission failure with or without tracking area identifier (TAI) change. In step 622, UE 601 established a NAS signaling connection and is in connected mode on USIM1. In step 623, the user experience on USIM2 becomes poor. In one novel aspect, in response to the transmission failure, UE 601 does NOT restart the service request procedure. This is because the purpose of the service request procedure is to reject the paging on USIM1 (and to release the established NAS signaling connection) to facilitate the operation on USIM2. Therefore, in step 631, UE 601 aborts the service request procedure, enters state EMM-REGISTERED, locally releases the NAS signaling connection, stops timer T3417 and locally releases any resources allocated for the service request procedure. In step 641, UE 601 is in IDLE mode on USIM1. In step 651, the user experience on USIM2 becomes better.

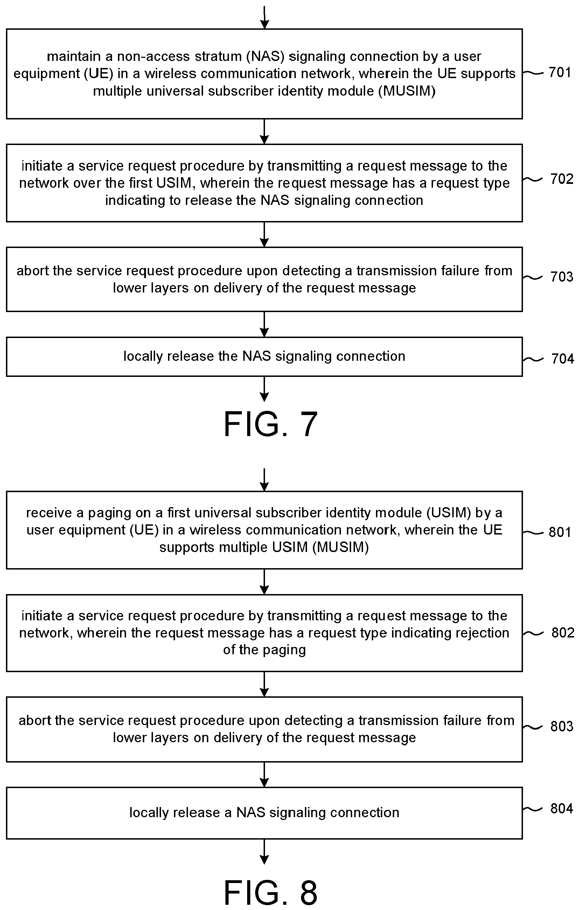

Figure 7 is a flow chart of a method of handling NAS signaling connection release for MUSIM UE in accordance with one novel aspect of the present invention. In step 701, a UE maintains s a non-access stratum (NAS) signaling connection in a wireless communication network. The UE supports multiple universal subscriber identity module (MUSIM) and the NAS signaling connection is established. In step 702, the UE initiates a service request procedure by transmitting a request message to the network over the first USIM. The request message has a request type indicating to release the NAS signaling connection. In step 703, the UE aborts the service request procedure upon detecting a transmission failure from lower layers on delivery of the request message. In step 704, the UE locally releases the NAS signaling connection.

Figure 8 is a flow chart of a method of handling rejection of paging for MUSIM UE in accordance with one novel aspect of the present invention. In step 801, a UE receives a paging on a first universal subscriber identity module (USIM) in a wireless communication network. The UE supports multiple USIM (MUSIM). In step 802, the UE initiates a service request procedure by transmitting a request message to the network. The request message has a request type indicating rejection of the paging. In step 803, the UE aborts the service request procedure upon detecting a transmission failure from lower layers on delivery of the request message. In step 804, the UE locally releases a NAS signaling connection.

Although the present invention is described above in connection with certain specific embodiments for instructional purposes, the present invention is not limited thereto. Accordingly, various modifications, adaptations, and combinations of various features of the described embodiments can be practiced without departing from the scope of the invention as set forth in the claims.

## Claims

1. A method, comprising:
maintaining a non-access stratum (NAS) signaling connection by a user equipment (UE) in a wireless communication network, wherein the UE supports multiple universal subscriber identity module (MUSIM);
initiating a service request procedure by transmitting a request message to the network, wherein the request message has a request type indicating to release the NAS signaling connection;
aborting the service request procedure upon detecting a transmission failure from lower layers on delivery of the request message; and
locally releasing the NAS signaling connection.

2. The method of Claim 1, wherein the network is an EPS network, and the request message is a SERVICE REQUEST message, a CONTROL PLANE SERVICE REQUEST message, or an EXTENDED SERVICE REQUEST message; or
wherein the network is a 5GS network, and the request message is a SERVICE REQUEST message or a CONTROL PLANE SERVICE REQUEST message.

3. The method of Claim 1, wherein the service request procedure is triggered by the UE over a first USIM when the UE initiates another application on a second USIM; and
wherein the application is started to transmit on the second USIM upon the UE entering an IDLE mode on the first USIM.

4. The method of Claim 1, wherein the transmission failure of the request message is with a tracking area identifier (TAI) change from the lower layers; and
wherein a changed or current or new tracking area identifier (TAI) is part of a TAI list stored in the UE.

5. The method of Claim 1, wherein the transmission failure of the request message is with no tracking area identifier (TAI) change from the lower layers.

6. The method of Claim 1, wherein the UE stops timer T3417, stops timer T3517, enters state EMM-REGISTERED, enters state 5GMM-REGISTERED, or locally releases resources allocated for the service request procedure.

7. A User Equipment (UE), comprising:
a connection handling circuit that is configured to maintain a non-access stratum (NAS) signaling connection in a wireless communication network, wherein the UE is configured to support multiple universal subscriber identity module (MUSIM);
a transmitter that is configured to transmit a request message to the network and thereby initiating a service request procedure, wherein the request message has a request type indicating to release the NAS signaling connection; and
a control circuit that is configured to abort the service request procedure upon detecting a transmission failure from lower layers on delivery of the request message, wherein the UE is configured to locally release the NAS signaling connection.

8. A method, comprising:
receiving a paging by a user equipment (UE) in a wireless communication network, wherein the UE supports multiple universal subscriber identity module (MUSIM);
initiating a service request procedure by transmitting a request message to the network, wherein the request message has a request type indicating rejection of the paging;
aborting the service request procedure upon detecting a transmission failure from lower layers on delivery of the request message; and
locally releasing a non-access stratum (NAS) signaling connection.

9. The method of Claim 8, wherein the network is an evolved packet system (EPS) network, and the request message is a SERVICE REQUEST message, an EXTENDED SERVICE REQUEST message or a CONTROL PLANE SERVICE REQUEST message; or
wherein the network is a 5GS network, and the request message is a SERVICE REQUEST message or a CONTROL PLANE SERVICE REQUEST message.

10. The method of Claim 8, wherein the request message is triggered by the UE over a first USIM when the UE has an ongoing application on a second USIM; and
wherein the UE re-enters an IDEL mode over the first USIM upon locally releasing the NAS signaling connection, and wherein the application has improved performance on the second USIM upon the UE re-entering the IDLE mode on the first USIM.

11. The method of Claim 8, wherein the transmission failure of the request message is with a tracking area identifier (TAI) change from the lower layers; and
wherein a changed or current or new tracking area identifier (TAI) is part of a TAI list stored in the UE.

12. The method of Claim 8, wherein the transmission failure of the request message is with no tracking area identifier (TAI) change from the lower layers.

13. The method of Claim 8, wherein the UE stops timer T3417, stops timer T3517, enters state EMM-REGISTERED, enters state 5GMM-REGISTERED, or locally releases resources allocated for the service request procedure.

14. A User Equipment (UE), comprising:
a receiver that is configured to receive a paging in a wireless communication network, wherein the UE is configured to support multiple universal subscriber identity module (MUSIM);
a transmitter that is configured to transmit a request message to the network and thereby initiating a service request procedure, wherein the request message has a request type indicating rejection of the paging; and
a control circuit that is configured to abort the service request procedure upon detecting a transmission failure from lower layers on delivery of the request message, wherein the UE is configured to locally release a non-access stratum (NAS) signaling connection.
